Europäisches Patentamt

European Patent Office

Office européen des brevets

(19)

(11) Numéro de publication : **0 177 410**
**B1**

(12)

# FASCICULE DE BREVET EUROPÉEN

(45) Date de publication du fascicule du brevet :
09.09.87

(21) Numéro de dépôt : 85401871.0

(22) Date de dépôt : 25.09.85

(51) Int. Cl.⁴ : **B 60 D   1/08**

(54) **Plaque-support de mains d'accouplement et de prises électriques pour semi-remorque citerne isolée.**

(30) Priorité : 28.09.84 FR 8414986

(43) Date de publication de la demande :
09.04.86 Bulletin 86/15

(45) Mention de la délivrance du brevet :
09.09.87 Bulletin 87/37

(84) Etats contractants désignés :
BE DE GB IT NL

(56) Documents cités :
US-A- 2 616 945
US-A- 2 658 185
US-A- 3 420 546
US-A- 3 497 707
US-A- 4 394 027

(73) Titulaire : **S.A. ETABLISSEMENTS MAGYAR**
**13, Avenue Albert Ier**
**F-21000 Dijon (FR)**

(72) Inventeur : **Magyar, Georges**
**Flacey**
**F-21490 Ruffey-Les-Echirey (FR)**

(74) Mandataire : **Brot, Philippe et al**
**CABINET BROT et JOLLY 83, rue d'Amsterdam**
**F-75008 Paris (FR)**

Jouve, 18, rue St-Denis, 75001 Paris, France

## Description

On sait qu'une semi-remorque citerne est équipée de feux de signalisation et d'éclairage ainsi que d'un système de freinage pneumatique qui sont commandés depuis la cabine de pilotage du véhicule tracteur.

Jusqu'à présent, les connexions respectives entre le circuit d'alimentation électrique et le circuit pneumatique du véhicule tracteur d'une part, et ceux de la semi-remorque citerne d'autre part, étaient réalisées à partir d'un support en tôle pliée ou d'un boîtier moulé, muni de mains d'accouplement et de prises électriques. Ce support était fixé sur le fond avant en forme de calotte sphérique, ou sur le prolongement de la plaque d'attelage.

Cependant, un tel support s'intégrait mal à la citerne puisqu'il formait une masse saillante inesthétique. De plus, en raison de sa forme généralement anti-aérodynamique, il possédait un mauvais pouvoir pénétrant dans l'air et introduisait donc un coefficient de freinage lors du déplacement du véhicule. On comprend également que sa présence même rendait plus difficile le nettoyage de la jaquette de protection du fond. Enfin, un tel support assurait une étanchéité imparfaite des connexions électriques et une mauvaise protection des canalisations pneumatiques.

La présente invention a pour but de remédier à tous ces inconvénients du support selon la technique antérieure connue, et propose à cet effet un support de mains d'accouplement et de prises électriques pour semi-remorque citerne comprenant un corps et deux fonds en forme de calotte sphérique, isolés par une épaisse couche de matière isolante revêtue extérieurement par une jaquette métallique, ledit support étant constitué par une plaque équipée de plusieurs mains d'accouplement et de prises électriques caractérisé en ce que ladite plaque est fixée par sa périphérie sur le bord d'une fenêtre pratiquée dans la paroi de fond de la jaquette, un joint annulaire assurant l'étanchéité entre la plaque et ledit bord de la fenêtre, et en ce que les conducteurs électriques et les canalisations pneumatiques de la semi-remorque citerne sont protégés dans un flexible métallique noyé dans ladite couche de matière isolante, et se raccordent respectivement, à travers ladite fenêtre, aux mains d'accouplement et aux prises électriques.

Avantageusement, la jaquette de protection du fond avant est repoussée lors de la fabrication, de manière à y former une portion saillante vers l'extérieur, en forme de coupe, pourvue d'un fond plat de même surface que la plaque-support et dans lequel fond est découpée centralement ladite fenêtre en ménageant le rebord périphérique pour l'application de la plaque-support.

La plaque-support peut être fixée par tout moyen connu sur ledit fond plat, mais de préférence on la fixera au moyen de plusieurs vis et écrous borgnes répartis uniformément à la périphérie de la fenêtre.

On comprend qu'une fois que la plaque est fixée, elle forme avec la paroi latérale de la portion saillante une surface pratiquement unie et sans discontinuité. Le joint annulaire assure une excellente étanchéité entre la plaque et la fenêtre, s'opposant ainsi à l'introduction de tout liquide ou de toute souillure préjudiciables à un bon contact électrique. En même temps, le joint emplit l'interstice compris entre la plaque et le fond plat de ladite portion saillante, donnant à l'assemblage un aspect de fini. Le nettoyage de la paroi avant de la jaquette s'en trouve grandement facilité.

Un mode de réalisation de l'invention sera décrit à présent en détail en regard du dessin annexé dans lequel :

La figure 1 est une vue partielle en coupe longitudinale d'une citerne isolée munie sur son fond avant d'un support de mains d'accouplement et de prises électriques selon l'invention ;

La figure 2 est une vue à plus grande échelle d'un détail de la figure 1 ;

La figure 3 est une vue en élévation du support, dans le sens de la flèche de la figure 2 ; et

La figure 4 montre à plus grande échelle un détail de la figure 2.

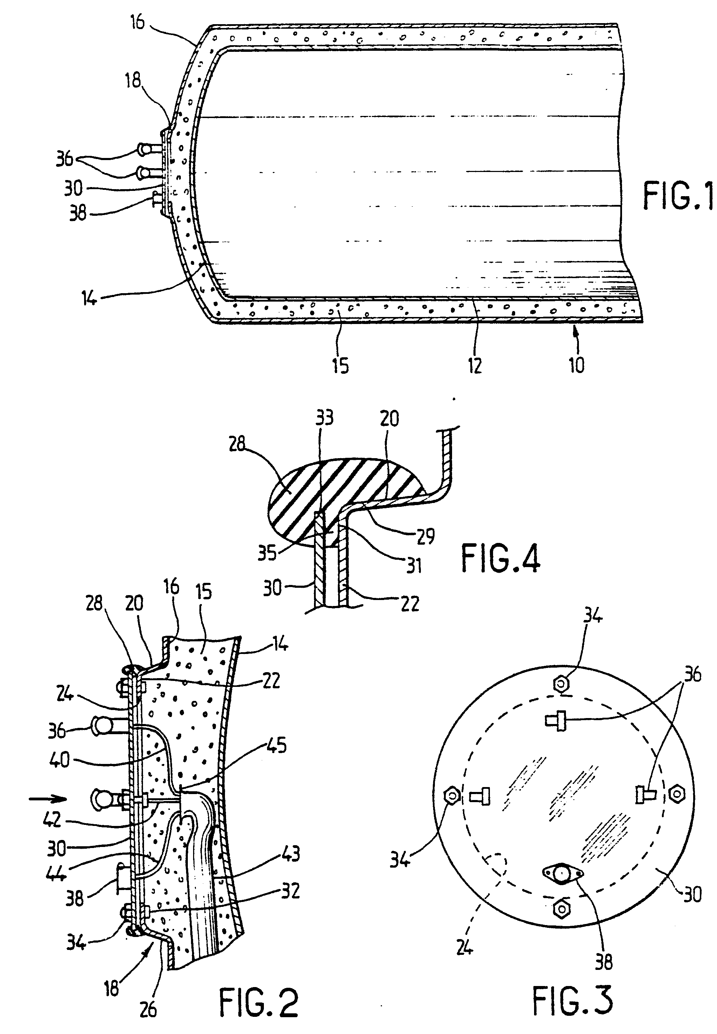

La citerne 10 représentée sur la figure 1 comprend un corps 12 de forme généralement cylindrique, fermé à ses extrémités par des parois de fond en forme de calotte sphérique, dont seule la paroi de fond avant 14 est représentée sur la figure 1. Le corps et les fonds sont isolés par une épaisse couche de matière isolante 15 qui est recouverte extérieurement d'une jaquette 16 métallique ou en matière plastique qui assure la protection mécanique de l'isolant en même temps qu'elle confère à la citerne un aspect brillant esthétique.

La jaquette qui recouvre le fond avant 14 est repoussée ou emboutie dans sa partie centrale de manière à faire apparaître une portion 18 en forme de coupe, pourvue d'une paroi latérale 20 sensiblement tronconique, de même axe que l'axe longitudinal de la citerne et qui se raccorde à un fond plat 22 circulaire, orthogonal audit axe. Lorsque la jaquette est en matière plastique la portion saillante 18 est réalisée par moulage. Le fond plat 22 est percé centralement d'une fenêtre 24 et se réduit donc à un rebord périphérique qui entoure ladite fenêtre. La paroi 20 se raccorde d'autre part à la paroi de la jaquette par une portion annulaire 26 à faible rayon de courbure.

Sur ledit fond plat 22 est appliquée, avec interposition d'un joint annulaire 28, une plaque-support circulaire 30 de diamètre sensiblement égal au diamètre externe du fond 22.

Comme le montre la figure 4, le joint présente un profil annulaire concave 29 qui vient épouser étroitement les formes de la paroi tronconique 20 et du fond plat 22. A une faible distance de la paroi 31 par laquelle le profil 29 s'applique sur le fond plat, est formée une gorge 33 à parois parallèles à la paroi 31 et dans laquelle vient s'encastrer la périphérie de la plaque-support 30.

Ainsi, la plaque-support 30 est légèrement écartée du fond plat 22 par la nervure 35 qui est définie entre la gorge 33 et la paroi 31 du joint. Elle est maintenue dans cette position au moyen de plusieurs vis 32 et écrous 34 uniformément répartis autour de la périphérie de la plaque, comme le montre la figure 3.

La plaque-support 30 porte une pluralité de mains d'accouplement 36 et de prises électriques 38 (respectivement au nombre de trois et de un sur la figure 3). Auxdites mains d'accouplement et prises électriques viennent se raccorder respectivement, depuis la face intérieure de la plaque et à travers la fenêtre 24, les canalisations pneumatiques 40, 42 et le conducteur électrique 44 de la semi-remorque citerne. Ces derniers sont protégés par un flexible métallique 43 noyé dans l'épaisseur de la couche de matière isolante de la citerne. Le flexible se termine à faible distance de la plaque-support 30 par un collet 45 évasé vers l'extérieur pour ne pas endommager les canalisations et le conducteur.

La plaque 30 forme avec la paroi latérale 20 et avec la surface de la jaquette 16 une surface régulière facile à nettoyer. Le joint 28 assure une bonne étanchéité et s'oppose à toute introduction de corps étrangers à travers la fenêtre 24, vers les connexions électriques et pneumatiques ainsi que vers l'isolant. Les canalisations pneumatiques et les conducteurs sont parfaitement protégés par le flexible 43 et par la matière isolante contre les chocs et les agressions extérieures.

**Revendications**

1. Support de mains d'accouplement et de prises électriques pour semi-remorque citerne comprenant un corps (12) et deux fonds (14) en forme de calotte sphérique, isolés par une épaisse couche de matière isolante (15) revêtue extérieurement par une jaquette métallique (16), ledit support étant constitué par une plaque (30) équipée de plusieurs mains d'accouplement (36) et de prises électriques (38) caractérisé en ce que ladite plaque est fixée par sa périphérie sur le bord d'une fenêtre (24) pratiquée dans la paroi de fond de la jaquette (16), un joint annulaire (28) assurant l'étanchéité entre la plaque et ledit bord de la fenêtre, et en ce que les conducteurs électriques (44) et les canalisations pneumatiques (40, 42) de la semi-remorque citerne sont protégés dans un flexible métallique (43) noyé dans ladite couche de matière isolante (15), et se raccordent, respectivement, à travers ladite fenêtre, aux mains d'accouplement et aux prises électriques.

2. Support selon la revendication 1, caractérisé en ce que la jaquette de protection (16) du fond avant (14) est repoussée lors de la fabrication, de manière à y former une portion saillante (18) vers l'extérieur, en forme de coupe, pourvue d'une paroi latérale sensiblement tronconique (20) et d'un fond plat (22) de même surface que la plaque-support (30) et dans lequel fond est découpée centralement ladite fenêtre (24) en ménageant le rebord périphérique pour l'application de la plaque-support.

3. Support selon l'une des revendications 1 et 2, caractérisé en ce que la plaque-support (30) est fixée sur le fond plat (22) au moyen de plusieurs vis (32) et écrous (34) répartis uniformément à la périphérie de la fenêtre.

4. Support selon l'une des revendications précédentes, caractérisé en ce que le joint (28) comporte un profil annulaire concave (29) qui vient épouser les formes de la paroi tronconique (20) et du fond plat (22), et une gorge (33) dans laquelle s'encastre la périphérie de la plaque-support (30).

**Claims**

1. A support for coupling members and electrical connectors for a tanker semitrailer comprising a body (12) and two part-spherical end portions (14), which are insulated by a thick layer of insulating material (15) externally covered by a metal jacket (16), said support comprising a plate (30) fitted with a plurality of coupling members (36) and electrical connectors (38) characterised in that said plate is fixed by its periphery to the edge of an opening (24) provided in the end wall of the jacket (16), an annular gasket (28) providing for a seal between the plate and the edge of the opening, and that the electrical conductors (44) and the pneumatic conduits (40, 42) of the tanker semitrailer are protected in a metal flexible conduit (43) which is embedded in said layer of insulating material (15) and are respectively connected through said opening to the coupling members and to the electrical connectors.

2. A support according to claim 1 characterised in that the protection jacket (16) of the front end portion (14) is worked during production thereof so as to form thereon a portion (18) which projects outwardly in a cup-like configuration, provided with a substantially frustoconical side wall (20) and a flat end (22) of the same area as the support plate (30), said opening (24) being centrally cut out in said end (22), thereby providing the peripheral rim portion for fitting of the support plate.

3. A support according to one of claims 1 and 2 characterised in that the support plate (30) is fixed to the flat end (22) by means of a plurality of screws (32) and nuts (34) which are distributed uniformly at the periphery of the opening.

4. A support according to one of the preceding claims characterised in that the gasket (28) comprises a concave annular profile (29) which matches the shapes of the frustoconical wall (20) and the flat end (22), and a groove (33) into which the periphery of the support plate (30) engages.

**Patentansprüche**

1. Trägerplatte für die Anschlußköpfe von Fluidleitungen und elektrischen Leitungen eines Tank-Sattelanhängers, welcher aus einem Tankbehälter (12) und zwei kugelkalottenartigen Stirnwänden (14), die durch eine dicke, außenseitig durch eine metallische Schutzverkleidung (16) umgebene Isolierschicht (15) isoliert sind, besteht, wobei die Trägerplatte durch eine, mit mehreren Fluid-Anschlußköpfen (36) und elektrischen Anschlüssen (38) versehene Platte (30) gebildet wird, dadurch gekennzeichnet, daß die Platte (30) umfangsseitig auf der Berandung eines in der Stirnwand der Schutzverkleidung (16) eingearbeiteten Ausschnitts (24) angebracht ist, daß zwischen der Platte (30) und der Berandung des Ausschnitts (24) ein Dichtring (28) angeordnet ist und daß sowohl die elektrischen Leiter (44) als auch die Fluidleitungen (40, 42) des Tank-Sattelanhängers in einem, in die Isolierschicht (15) eingebundenen flexiblen Metallschlauch (43) geschützt angeordnet sind und sich durch den Ausschnitt (24) hindurch bis zu den Anschlußköpfen (36) und Anschlüssen (38) hin erstrecken.

2. Trägerplatte nach Anspruch 1, dadurch gekennzeichnet, daß die Schutzverkleidung (16) der Stirnwand (14) mit einer Ausformung versehen ist, und zwar derart, daß sich ein nach außen vorspringendes Teil (18) ergibt, wobei das Teil (18) — im Schnitt gesehen — eine deutlich kegelstumpfartig ausgebildete Seitenwandung (20) und einen ebenen Boden (22) aufweist, der eine der Platte (30) entsprechende Fläche aufweist, wobei in dem Boden (22) der Ausschnitt (24) mittig eingeschnitten ist und wobei das Teil (18) mit der, der Anbringung der Trägerplatte dienenden, sich in Umfangsrichtung erstreckenden Berandung versehen ist.

3. Trägerplatte nach einem der vorangegangenen Ansprüche 1 oder 2, dadurch gekennzeichnet, daß die Trägerplatte mittels mehrerer, jeweils gleichförmig entlang der Peripherie des Ausschnittes (24) angeordneter Schrauben (32) und Muttern (34) an dem ebenen Boden (22) befestigt ist.

4. Trägerplatte nach einem der vorangegangenen Ansprüche, dadurch gekennzeichnet, daß der Dichtring (28) ein konkav ausgebildetes Ringprofil (29) aufweist, welches sich an die Formen der kegelstumpfartigen Seitenwandung (20) und des ebenen Bodens (22) anpaßt und daß der Dichtring (28) eine Welle (33) aufweist, in welcher der Umfangsbereich der Trägerplatte aufgenommen ist.

FIG.1

FIG.4

FIG.2

FIG.3